## Europäisches Patentamt

## European Patent Office

## Office européen des brevets

(11) Veröffentlichungsnummer: **0 219 663**
**B1**

(12) # EUROPÄISCHE PATENTSCHRIFT

(45) Veröffentlichungstag der Patentschrift:
12.07.89

(51) Int. Cl.⁴: **B61F 5/30,** B60G 17/00

(21) Anmeldenummer: 86112194.5

(22) Anmeldetag: 03.09.86

(54) Aktives Federungselement, insbesondere für schienengebundene Hochgeschwindigkeitsfahrzeuge.

(30) Priorität: 19.10.85 DE 3537325

(43) Veröffentlichungstag der Anmeldung:
29.04.87 Patentblatt 87/18

(45) Bekanntmachung des Hinweises auf die Patenterteilung:
12.07.89 Patentblatt 89/28

(84) Benannte Vertragsstaaten:
AT CH DE FR GB IT LI

(56) Entgegenhaltungen:
EP-A- 0 052 782
EP-A- 0 100 513
AT-B- 262 368
DE-A- 3 330 368
DE-A- 3 418 646
GB-A- 1 148 003

(73) Patentinhaber: **Messerschmitt-Bölkow-Blohm Gesellschaft mit beschränkter Haftung,**
Robert-Koch-Strasse, D-8012 Ottobrunn(DE)

(72) Erfinder: **Steinmetz, Guenter, Oberlanger Moor 106,**
D-4472 Haren(DE)

ACTORUM AG

## Beschreibung

Die Erfindung bezieht sich auf ein aktives Federungselement gemäß dem Oberbegriff des Patentanspruches I.

Federungssysteme von bodengebundenen und insbesondere schienengebundenen Fahrzeugen sollen zum einen den Fahrzeugaufbau, z.B. eine Fahrgastkabine, abfedern, um so den Komfort für die Fahrgäste hoch zu halten, und zum anderen die unabgefederten Massen und damit auch die Belastungen von Fahrwegen und Fahrzeugsystemen reduzieren. Hieraus folgt, daß ein Federungssystem um so besser ist, je niedriger die Abfederungseckfrequenz und - bis zu einem gewissen Grade - die relative Dampfung des Federungssystems sind.

Eine praktische Grenze für sehr weiche Federungssysteme, d.h. Federungssysteme mit niedrigen Abfederungseckfrequenzen, ergibt sich einfach daraus, daß bei Laständerungen am Fahrzeugaufbau bzw. allgemein an dem von dem Federungssystem getragenen Körper die Federwege um so größer werden, je weicher die Federung, d.h. je niedriger die Abfederungseckfrequenz ist.

Um trotzdem Federungssysteme mit relativ niedrigen Abfederungsfrequenzen trotz z.B. betriebsbedingter quasistatischer Laständerungen realisieren zu können, versieht man üblicherweise die Federungssysteme bzw. die einzelnen Federungselemente mit sogenannten Niveau-Steuerungen, bei denen es sich eigentlich um Regelungen handelt. Diese Niveau-Steuerungen machen das Federungssystem zu einem aktiven System, wobei in der Regel bei jedem aktiven Federungselement der Abstand zwischen der abgefederten und unabgefederten Masse gemessen und in Abhängigkeit dieses Abstandes das Federungselement verstellt wird. Dies kann z.B. dadurch erfolgen, daß bei einem Federungselement mit aktiven Luftfedern die Menge der Luft in der Luftfeder in Abhängigkeit des erwähnten Abstandes verändert wird mit der Maßgabe, daß nach genügend langer Regelzeit ein vorgegebener Sollabstand zwischen der abgefederten und unabgefederten Masse eingestellt wird.

Derartige weiche aktive Federungselemente mit Niveau-Steuerungen haben sich ausgezeichnet bewährt und existieren in vielfältigen Anwendungen, insbesondere im Fahrzeugbau.

Die Einsatzgrenzen eines Federungssystemes mit derartigen aktiven Federungselementen werden offensichtlich, wenn die Abfederungsfrequenz relativ niedrig, die Stell- und Rückstellgeschwindigkeit der Niveau-Steuerung relativ gering und auch der zugelassene Federweg relativ klein bzw. begrenzt sein soll, sowie dann, wenn die an der abgefederten Masse, z.B. der Fahrzeugkabine angreifenden Laständerungen und insbesondere deren zeitliche Ableitung groß sind.

Es ist leicht einzusehen, daß Änderungsraten der an der abgefederten Masse angreifenden Lasten bei vorteilhaften weichen Federungssystemen mit niedrigen Abfederungsfrequenzen zu großen, unvorteilhaften Federwegen und somit Auslenkungen des Fahrzeugaufbaus führen. Wird dem z.B. durch hohe Stellgeschwindigkeit der Niveau-Steuerung entgegengewirkt, so wird der Zielsetzung, nämlich der Realisierung eines weichen Federungssystems, entgegengearbeitet, d.h. das gesamte Federungssystem aus einer weichen passiven Abfederung und einer aktiven harten Niveau-Steuerung hätte dann wieder relativ harte den Fahrkomfort mindernde Federungseigenschaften.

Insbesondere bei schienengebundenen Hochgeschwindigkeitsfahrzeugen, seien dieses Rad/-Schiene-Fahrzeuge oder Magnetschwebefahrzeuge, existieren nun folgende Probleme:

a) Der Fahrkomfort soll sehr gut sein, d.h. der Fahrzeug aufbau mit der Fahrgastkabine soll möglichst erschütterungsfrei bewegt werden.

b) Die zugelassenen Abweichungen der Schienen des Fahrweges von den Ideallinien sollen möglichst groß sein dürfen, um eine kostengünstige Realisierung und Wartung der Fahrwege zu erlauben. Dies bedeutet, daß diese Abweichungen zumindest teilweise auch von dem Federungssystem berücksichtigt werden müssen.

c) Die dynamischen Lasten auf Fahrweg- und Fahrzeugsystem sollen möglichst klein sein.

Dies bedingt, daß die bewegten Fahrzeugmassen, d.h. der Fahrzeugaufbau mit der Fahrgastkabine möglichst gut, d.h. insbesondere möglichst niederfrequent abgefedert werden muß, was z.B. durch weiche sogenannte Sekundärfederungssysteme realisiert werden kann. Derartige Sekundärfederungssysteme sind bei Rad/Schienenfahrzeugen zwischen Drehgestellen und Fahrgastkabine, bei Magnetschwebefahrzeugen zwischen Schwebegestellen und Fahrgastkabine angeordnet. Dem stehen nun zwei Forderungen gegenüber, die insbesondere bei hohen Fahrgeschwindigkeiten relevant sind:

d) Die Stellwege der Federungssysteme, z.B. die Federwege der Sekundärfederung, sollen möglichst klein sein, da auch niederfrequente große Bewegungen der Fahrgastkabine unkomfortabel sein können, so z.B. Rollbewegungen der Fahrgastkabine.

e) Die zeitlichen Änderungen der an der Fahrgastkabine angreifenden Lasten sind relativ groß, insbesondere bedingt durch große aerodynamische Zusatzlasten infolge Seitenwind.

Während aus den obigen Punkten a) bis c) die Forderung nach niedrigen Abfederungsfrequenzen folgt, resultiert aus den Absätzen d) und e) unmittelbar die gegenteilige Anforderung.

Der Erfindung liegt die Aufgabe zugrunde, insbesondere für schienengebundene Hochgeschwindigkeitsfahrzeuge ein aktives Federungselement der in Rede stehenden Art anzugeben, mit dem ein hoher Fahrkomfort erreichbar ist, d.h. das eine niedrige Abfederungsfrequenz besitzt, wobei gleichzeitig die maximalen Federwege klein bleiben sollen.

Diese Aufgabe ist gemäß der Erfindung durch die im kennzeichnenden Teil des Patentanspruches I angegebenen Merkmale gelöst.

Demgemäß ist ein aktives Federungselement aus drei Elementen aufgebaut, nämlich

einer weichen Feder mit vorzugsweise linearer Federcharakteristik, die im wesentlichen die günstigen Abfederungseigenschaften durch die niedrige Abfederungsfrequenz garantiert, einem aktiven, weitgehend rückwirkungsfreien längenveränderlichen Stellglied für die Niveau-Regelung, das die Aufgabe hat, seine Länge so lange zu verstellen, bis der gewünschte Sollabstand zwischen abgefederter und unabgefederter Masse erreicht ist und

einem aktiven Feder/Dämpfungselement, das parallel zu der weichen Feder und dem aktiven Stellglied zwischen abgefederter und unabgefederter Masse gelegen ist und zunächst für kleine Abweichungen aus der Sollage als Dämpfer mit niedriger Dämpfung wirkt, dessen Dämpfungseigenschaft jedoch ab einem bestimmten kritischen Federweg in beiden Richtungen progressiv verläuft, so daß das Feder/Dämpfungselement härter wird.

Die Federungseigenschaften eines aktiven Federungselements gemäß der Erfindung sollen für Beispiele von Fahrbetriebspunkten fallweise unterschieden werden:

I. Das Fahrzeug bewege sich auf gerader Strecke ohne nennenswerte äußere Störungen, so daß die ungefederte Masse, z.B. ein Drehgestell des Hochgeschwindigkeitsfahrzeuges, sich näherungsweise auf einer geraden Linie mit überlagerten mittel- und hochfrequenten Abweichungen bewegt, deren Mittelwert jedoch näherungsweise konstant über der Zeit ist, und wobei auf die abgefederte Masse, d.h. den Fahrzeugaufbau oder die Fahrgastkabine nur konstante bzw. näherungsweise konstante Kräfte, z.B. Windkräfte wirken. In diesem Falle gilt, daß die Stellgeschwindigkeit des aktiven Stellgliedes mindestens im Mittel gleich Null ist und das aktive Feder/Dämpfungselement als Dämpfer mit niedriger Dämpfung arbeitet, so daß das gesamte Federungselement als weiche Federung mit relativ geringer relativer Dämpfung wirkt. Störungen des Fahrweges bzw. mittel- und hochfrequente Bewegungen der nicht abgefederten Masse werden sehr gut gefiltert, so daß die abgefederte Masse, d.h. die Fahrgastkabine in Ruhe bleibt.

2. Es sei angenommen, daß die von außen auf das Fahrzeug wirkende Kraft sich sehr schnell um einen beträchtli lichen Betrag verändert, der durchaus 30 % bis 40 % des oben erwähnten konstanten Kraftwertes betragen kann. Dann ergibt sich folgender Sachverhalt: Die weiche Feder behindert die Bewegung der abgefederten Masse kaum, das aktive Stellglied ist zwar steif, da es jedoch in Serie zu der weichen Feder geschaltet ist, kann es ebenfalls nicht kurzfristig die abgefederte Masse, d.h. die Fahrgastkabine an der Bewegung hindern. Das aktive Feder/Dämpfungselement hingegen übernimmt aufgrund seiner nichtlinearen Feder/-Dämpfungscharakteristik die Abstützfunktion und hindert die abgefederte Masse an der Ausführung großer Relativwege gegenüber der unabgefederten Masse. Nach genügend langer Zeit übernimmt der durch die weiche Feder und das aktive Stellglied gebildete Kraftpfad die Last, da das aktive Stellglied aufgrund der ihm zugewiesenen Aufgabe der Niveau-Regelung seine Länge so verändert, bis der Sollabstand zwischen abgefederter und nicht abgefederter Masse wieder erreicht ist. In diesem Zustand befindet sich das aktive Feder/Dämpfungselement wieder in seinem Ausgangszustand, das gesamte aktive Federungselement arbeitet wiederum wie eine weiche Federung, da nur die weiche Feder und das aktive Stellglied die quasi statischen Lasten tragen.

3. Ist die äußere, auf das Fahrzeug wirkende Kraft annähernd konstant und wird die unabgefederte Masse relativ kurzfristig um eine Kurve bewegt, z.B. beim Übergang von einer Geraden auf einen Kreisbogen, derart, daß eine erhebliche mittlere Bahnführungsbeschleunigung auftritt, dann wirkt das Gesamtsystem ähnlich wie im obigen Fall 2. Wiederum übernimmt zunächst das aktive Feder/Dämpfungselement die Führung der abgefederten Masse, d.h. der Fahrgastkabine, bis nach endlicher, durch die Laufgeschwindigkeit des aktiven Stellgliedes be stimmter Zeit der durch die weiche Feder und dieses Stellglied gebildete Kraftpfad die gesamte quasistatische Last aus der Fliehbeschleunigung der abgefederten Masse übernimmt.

Prinzipiell andere Lastfälle treten während des Fahrbetriebes des Fahrzeuges nicht auf. Dies bedeutet jedoch, daß in der Regel der Fahrzeugaufbau weich abgefedert ist. Die maximalen Stellwege des Federungselements können eingegrenzt werden und zwar schärfer als dies der weichen Feder entsprechen würde. Bei der Dimensionierung des aktiven Feder/ Dämpfungselements hat man freie Wahl zwischen kleinem Stellweg oder kleinen dynamischen Zusatzlasten. Der Federungs- und damit der Fahrkomfort bei dem Fahrzeug ist somit hoch.

Nur in Ausnahmefällen entsprechend den beiden obigen Punkten 2 und 3 liegt ein härteres Abfederungsverhalten vor. Nur in den relativ seltenen Fahrsituationen, in denen der Kraftpfad aus weicher Feder und aktivem Stellglied noch nicht die statische Last trägt, ist der durch die Vibration der nicht abgefederten Masse im Bereich von 2 bis 50 Hz bedingte Fahrkomfort schlechter als im Regelfall. Ebenfalls in seltenen Fahrsituationen sind die durch Unregelmäßigkeiten der Schienen verursachten dynamischen Zusatzlasten an Fahrweg- und Fahrzeugsystem größer als die entsprechenden dynamischen Zusatzlasten im Regelfall.

Insgesamt hat ein aktives Federungselement gemäß der Erfindung eine hohe Güte, da sich die Abfederungsfrequenz gegenüber herkömmlichen Systemen stark absenken läßt; Werte von 0,4 ... 0,5 Hz erscheinen realisierbar. Außerdem kann das aktive Federungselement und das gesamte Federungssystem so aufgebaut werden, daß parasitäre Reibungseffekte dadurch minimiert werden, daß die weiche Feder als Luftfeder ausgebildet wird und das aktive Stellglied und das aktive Feder/Dämpfungselement als hydraulische Elemente ausgebil det werden, wobei im Regelfall das Feder/Dämpfungselement keine statische Last trägt und daher unvermeidbare Reibwirkungen minimierbar sind.

Insgesamt lassen sich die oben angegebenen Forderungen a) bis e) vollständig erfüllen, lediglich mit der Einschränkung, daß die Forderungen a) und c) während des überwiegenden Teiles des Fahrbetriebes erfüllt sind.

Weitere Ausgestaltungen der Erfindung gehen aus den Unteransprüchen hervor.

Die Erfindung ist in Ausführungsbeispielen anhand der Zeichnung näher erläutert. In der Zeichnung stellen dar:

Figur 1 schematisch ein erstes Ausführungsbeispiel eines aktiven Federungselementes gemäß der Erfindung zur Abfederung eines Hochgeschwindigkeitsfahrzeuges;

Figur 2 ein Kennliniendiagramm eines Feder/Dämpfungselementes innerhalb des aktiven Federungselementes gemäß Figur 1;

Figur 3 ein modifiziertes Ausführungsbeispiel eines aktiven Federungselementes.

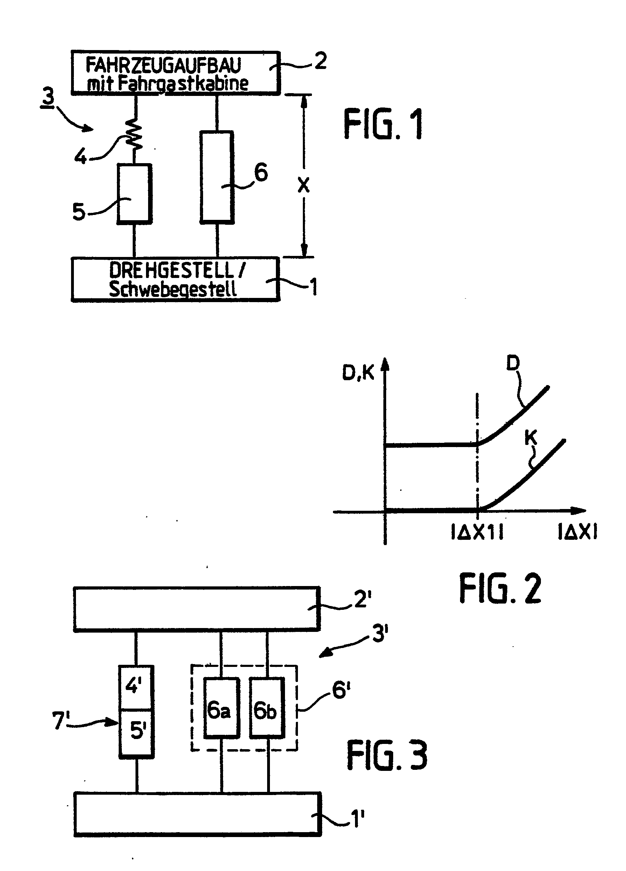

Von einem schienengebundenen Hochgeschwindigkeitsfahrzeug z.B. einem Rad/Schienefahrzeug oder einer Magnetschwebebahn, ist in Figur 1 lediglich eine nicht abgefederte Masse 1, z.B. das Dreh- bzw. Schwebegestell, und eine abgefederte Masse dargestellt, die für den Fahrzeugaufbau mit der Fahrgastkabine steht. Im folgenden wird für die beiden Massen 1 und 2 durchgehend von Drehgestell und Fahrzeugaufbau gesprochen.

Zwischen Drehgestell und Fahrzeugaufbau ist ein aktives Federungselement 3 vorgesehen, das aus einer weichen Feder 4, einem aktiven Stellglied 5 und einem aktiven Feder/Dämpfungselement 6 aufgebaut ist. Die Feder 4 und das Stellglied 5 sind hintereinander geschaltet und bilden einen Kraftpfad zwischen Drehgestell und Fahrzeugaufbau. Das aktive Feder/Dämpfungselement 6 ist parallel zu diesem Kraftpfad gelegen.

Der Abstand zwischen Drehgestell und Fahrzeugaufbau ist mit X bezeichnet.

Die weiche Feder 4 ist vorzugsweise eine Luftfeder mit niedriger Abfederungsfrequenz, die die Bewegung des Fahrzeugaufbaus kaum behindert. Die Luftfeder 4 hat eine vorzugsweise lineare Federkennlinie. Das aktive Stellglied 5 ist ein längenveränderliches geregeltes hydraulisches Stellglied, dessen Länge in Richtung des Abstandes X, d.h. des Federweges veränderlich ist. Als Meßgröße für die Verstellung des aktiven Stellgliedes und dessen Stellgeschwindigkeit dient zunächst der Abstand X zwischen Drehgestell und Fahrzeugaufbau. Die Stellgeschwindigkeit kann hiervon linear oder nicht linear abhängig sein. Die Stellgeschwindigkeit des aktiven Stellgliedes 5 kann zudem linear oder nicht linear abhängig gemacht werden von der Länge des Stellgliedes selbst, gegebenenfalls von der Rückstellkraft des aktiven Feder/Dämpfungselementes 6 und den zeitlichen Ableitungen dieser Größen. Außerdem können noch die Beschleunigungen des Fahrzeugaufbaues und des Drehgestells berücksichtigt werden.

Die Stellgeschwindigkeit des aktiven Stellgliedes 5 wird um einen Sollabstand X0 besonders klein oder bei Null ge halten, so daß um diesen Sollabstand eine Totzone wirksam wird. Bei kleinen Federwegen des Fahrzeugaufbaus um diesen Sollabstand kommen lediglich die weichen Federeigenschaften der Luftfeder 4 zum Tragen.

Das aktive Feder/Dämpfungselement 6 ist ein hydraulisches, kraftstellendes Stellglied. Realisiert werden kann dieses Stellglied durch einen hochfrequent/breitbandig arbeiten den Regelkreis mit Kraft- bzw. Druckrückführung. Hierbei kann davon ausgegangen werden, daß ein der Rückstellkraft F proportionaler gemessener Druck als Meßgröße zur Verfügung steht. Innerhalb des Regelkreises für das aktive Feder/Dämpfungselement 6 können praktisch beliebige Steuergesetze realisiert werden. Ausgangspunkt für diese Steuergesetze,(d.h. deren einfachste Form), ist jedoch die allgemeine Gleichung für die Rückstellkraft F: $F = D \cdot dx/dt + K \cdot \Delta X$

Die beiden Parameter D und K sind über dem Absolutwert für die Abstandsänderung $\Delta X$ in Figur 2 aufgezeigt. Bis zu einem kritischen Wert $\Delta XI$ wirkt das aktive Stellglied 5 wie ein herkömmlicher Dämpfer mit niedriger relativer Dämpfung entsprechend dem horizontalen Ast des Dämpfungsparameters D. Ab dem kritischen Wert $\Delta XI$ wird die Federcharakteristik progressiv ausgelegt, d.h. der Dämpfungsparameter D und ein bis zu der kritischen Abstandsänderung $\Delta XI$ auf Null gehaltener Kraftparameter steigen in Abhängigkeit der Abstandsänderung an.

Die obige systematische Gleichung kann an sich nach Vorgabe der oben erwähnten Forderungen a) bis e) frei gewählt werden und selbstverständlich verallgemeinert werden. So kann die Rückstellkraft F linear oder nicht linear abhängig gemacht werden von den gemessenen Beschleunigungen von Fahrzeugaufbau und Drehgestell, ferner abhängig gemacht werden von den Federeigenschaften des aktiven Stellgliedes 5, z.B. von dessen Rückstellkraft oder Hydraulikdruck.

In Figur 3 ist ein leicht modifiziertes aktives Federungselement 3' dargestellt, das zwischen dem Drehgestell 1' und dem Fahrzeugaufbau 2' eines Hochgeschwindigkeitsfahrzeuges angeordnet ist. Bei diesem aktiven Federungselement 3' sind die Funktionen der weichen Feder 4' und des aktiven Stellgliedes 5' zu einer gemeinsamen Baueinheit zusammengefaßt, die durch eine luftmengengesteuerte Luftfeder 7' realisiert wird. Deren Kraftkennlinie ist allgemein von der Abstandsänderung und der wirksamen Luftmenge abhängig. Zur Einstellung des Abstandes zwischen Drehgestell und Fahrzeugaufbau auf den Sollabstand wird noch eine Abhängigkeit von der zeitlichen Änderung der wirksamen Luftmenge berücksichtigt, die ihrerseits entsprechend den obigen Regelgesetzen für die hydraulischen Stellglieder von den Beschleunigungen des Fahrzeugaufbaus und Drehgestells und den Eigenschaften des aktiven Feder/Dämpfungselementes 6', der zeitlichen Änderung des Abstands usw. abhängt.

Das aktive Feder/Dämpfungselement 6' ist bei dieser Ausführungsform aus zwei parallelen Elementen 6a und 6b zusammengesetzt. Hierbei ist 6a ein normaler passiver Dämpfer, wohingegen das Element 6b ein aktives Feder/Dämpfungselement ähnlich wie das oben beschriebene Element ist, dessen beschreibende Gleichung um die Rückstellkraft des passiven Dämpfers 6a verringert ist. Durch diese Ausbildung werden Phasenfehler vermieden, die durch die endliche Bandbreite des Kraftreglers für dieses aktive Element bedingt sind. Die Gesamtsystemdampfung wird im quasilinearen Bereich dadurch nicht nachteilig beeinflußt.

Ein Hochgeschwindigkeitsfahrzeug wird mit einer Mehrzahl von beschriebenen aktiven Federungselementen abgefedert. Hierbei ist es möglich, jedes aktive Federungselement autonom zu gestalten, d.h. z.B. lediglich elektrische Energie für die Steuerung zuzuführen und die zum Betrieb des aktiven Federungselementes notwendigen Komponenten und Versorgungsanlagen in dem Federungselement zu integrieren. Das gesamte Federungssystem des Hochgeschwindigkeitsfahrzeugs kann somit im wesentlichen dezentral realisiert werden, was auch der Betriebssicherheit zugute kommt. Möglich ist auch, die hydraulische und/oder pneumatische Versorgung für die einzelnen aktiven Stellglieder im Hochgeschwindigkeitsfahrzeug zentral anzuordnen. In diesem Falle enthielte jedes aktive Federungselement einen dezentralen Versorgungspufferspeicher, so daß bei Ausfall der Zentralversorgung oder bei Leitungsbruch die aktiven Federungselemente arbeitsfähig bleiben.

Es sei noch darauf hingewiesen, daß die beschriebenen aktiven Federungselemente auch zu einer automatischen Neigung des Fahrzeugaufbaus bei Kurvendurchfahrten verwendet werden können. Diese Maßnahme erhöht beträchtlich den Fahrkomfort, da die jeweilige freie Seitenbeschleunigung in der Fahrgastkabine näherungsweise gleich Null wird, und zwar unabhängig von dem durch Fahrgeschwindigkeit, Kurvenradius und Fahrbahnneigungswinkel gebildeten Fahrzustand.

Um dieses zu erreichen, müßte der Sollabstand zwischen Drehgestell und Fahrzeugaufbau zu beiden Seiten des Fahrzeuges unabhängig voneinander verändert werden. Dies kann z.B. anhand von Daten geschehen, die von einem übergeordneten Fahrzeug-Informationssystem geliefert werden. Diese Daten können jedoch auch intern in dem Hochgeschwindigkeitsfahrzeug aufgrund von Meßwerten ermittelt werden.

Ebenso können die aktiven Federungselemente im Stand dazu ausgenutzt werden, innerhalb der aktiven Federungselemente vernünftige Kraftverteilungen zu erzielen, wenn das Hochgeschwindigkeitsfahrzeug z.B. in einer engen Kurve oder auf einem verwundenen Fahrwegstück steht oder hier langsam fährt.

## Patentansprüche

I. Aktives Federungselement für Fahrzeuge, insbesondere für schienengebundene Hochgeschwindigkeitsfahrzeuge, das zwischen einer nicht abgefederten und einer abgefederten Masse des Fahrzeuges angeordnet und mit einer aktiven Niveau-Regelung des Abstandes zwischen abgefederter und nicht abgefederter Masse auf einen Sollwert ausgerüstet ist, gekennzeichnet durch
eine weiche Feder (4) mit niedriger Abfederungsfrequenz, die mit einem Federende an der abgefederten Masse (2) befestigt ist,
ein aktives, in Richtung der Abstandsänderung zwischen nicht abgefederter und abgefederter Masse (I, 2) längenveränderliches Stellglied (5), dessen eines Ende mit dem zweiten Federende und dessen anderes Ende mit der nicht abgefederten Masse (I) verbunden ist und das zur Niveau-Regelung des Abstandes zwischen nicht abgefederter und abgefederter Masse (I, 2) auf den Sollwert dient und
ein aktives Feder/Dämpfungselement (6), das parallel zu Feder (4) und aktivem Stellglied (5) zwischen nicht ab gefederter und abgefederter Masse (I, 2) gelegen ist und eine von der Abstandsänderung zwischen nicht abgefederter und abgefederter Masse (I, 2) abhängige, zumindest ab einer kritischen Abstandsänderung (ΔXl) in beiden Richtungen progressive Feder/Dämpfungscharakteristik aufweist.

2. Federungssystem nach Anspruch I, dadurch gekennzeichnet, daß die weiche Feder (4) eine Luftfeder ist.

3. Federungssystem nach Anspruch I oder 2, dadurch gekennzeichnet, daß das aktive Stellglied (5) ein hydraulisches Stellglied ist.

4. Federungssystem nach Anspruch I, dadurch gekennzeichnet, daß die Funktion der weichen Feder (4') und des aktiven Stellgliedes (5') in einer einzigen luftmengengesteuerten Luftfeder (7') zusammengefaßt sind, wobei die wirksame Luftmenge der Luftfeder in Abhängigkeit der zeitlichen Änderung dieser Luftmenge geregelt wird.

5. Federungselement nach einem der vorhergehenden Ansprüche, dadurch gekennzeichnet, daß das aktive Feder/Dämpfungselement (6) ein hydraulisches Element ist.

6. Federungssystem nach Anspruch I, dadurch gekennzeichnet, daß das aktive Feder/Dämpfungsselement (6') aufgeteilt ist in einen passiven Dämpfer (6a) mit niedriger relativer Dämpfung und ein aktives Feder/Dämpfungselement (6b) mit progressiver Dämpfungscharakteristik, das im wesentlichen erst ab der kritischen Abstandsänderung (Δ Xl) wirksam wird.

7. Federungselement nach einem der vorhergehenden Ansprüche, dadurch gekennzeichnet, daß das Federungselement als autonome Einheit aufgebaut ist.

8. Federungselement nach einem der vorhergehenden Ansprüche, dadurch gekennzeichnet, daß das aktive Federungselement (3) zur automatischen Neigung der abgefederten Masse (2) bei Kurvenfahrten verwendet wird.

## Claims

1. High-duty spring suspension element for vehicles, especially for rail-bound high-speed vehicles, which is arranged between an unsprung and a spring-suspended mass of the vehicle and is equipped with an active level-regulation of the spacing between the spring-suspended and the unsprung mass to a nominal value, characterised in and by the following features:
- a soft spring (4) with low suspension frequency, which is fastened with one spring end to the spring-suspended mass (2),

– an active corresponding element (5), the length of which is variable in the direction of the distance variation between spring-suspended and unsprung mass (1, 2), one end of which is connected with the second spring end whilst its other end is connected with the unsprung mass (1) and which serves for level-control to nominal value of the distance between the unsprung and the spring-suspended mass (1, 2) and

– an active spring/shock absorber element (6), which extends parallel to the spring (4) and the active correcting element (5) between the unsprung and spring-suspended mass (1, 2) and which has a spring/damping factor which is dependent on the variation of distance between the unsprung and the spring-suspended mass (1, 2) and which is progressive in both directions at least from a critical distance change ($\Delta$X1) onwards.

2. A suspension system according to Claim 1, characterised in that the soft spring (4) is a pneumatic spring.

3. A suspension system according to Claim 1 or 2, characterised in that the active correcting element (5) is a hydraulic correcting element.

4. A suspension system according to Claim 1, characterised in that the function of the soft spring (4') and of the active correcting element (5') are combined in a single air-volume controlled pneumatic spring (7') in which the effective air volume of the pneumatic spring is regulated as a function of the temporal variation of this air volume.

5. A suspension element according to any one of the preceding Claims, characterised in that the active spring/shock absorber element (6) is a hydraulic element.

6. A suspension system according to Claim 1, characterised in that the active spring/shock absorber element (6') is divided into a passive absorber (6a) with low relative damping and an active spring/shock absorber element (6b) with progressive damping factor, which becomes substantially effective only from the critical distance variation ($\Delta$X1) onwards.

7. A suspension element according to any one of the preceding Claims, characterised in that the suspension element is constructed as an autonomous unit.

8. A suspension element according to any one of the preceding Claims, characterised in that the active suspension element (3) is utilized for automatic inclination of the spring-suspended mass (2) when travelling along curves.

**Revendications**

1. Organe de suspension actif pour véhicules, en particulier pour véhicules guidés circulant à grande vitesse, cet organe étant interposé entre une masse non suspendue et une masse suspendue du véhicule et comportant une régulation de niveau active pour régler à une valeur de consigne la distance entre la masse suspendue et la masse non suspendue, caractérisé par

– un ressort souple (4) de basse fréquence qui est fixé par une extrémité à la masse suspendue (2),

– un vérin actif (5) dont la longueur peut varier dans le sens de la variation de la distance entre les masses non suspendue et suspendue (1, 2) et dont une extrémité est raccordée à la seconde extrémité du ressort et l'autre extrémité à la masse non suspendue (1), ce vérin servant à la régulation de niveau pour le réglage à la valeur de consigne de la distance entre les masses non suspendue et suspendue (1, 2) et,

– un organe actif ressort/amortisseur (6) qui est placé parallèlement au ressort (4) et au vérin actif (5) entre les masses non suspendue et suspendue (1, 2) et présente une caractéristique ressort/amortissement dépendant de la variation de la distance entre les masses non suspendue et suspendue (1, 2) et progressivement dans les deux sens, tout au moins à partir d'une variation critique de la distance ($\Delta$X1).

2. Système de suspension selon la revendication 1, caractérisé par le fait que le ressort souple (4) est un ressort pneumatique.

3. Système de suspension selon la revendication 1 ou 2, caractérisé par le fait que le vérin actif (5) est un vérin hydraulique.

4. Système de suspension selon la revendication 1, caractérisé par le fait que les fonctions du ressort souple (4') et du vérin actif (5') sont réunis en un seul ressort pneumatique (7') commandé par volume d'air, le volume d'air actif du ressort pneumatique étant réglé en fonction de la variation dans le temps de ce volume d'air.

5. Organe de suspension selon l'une des revendications précédentes, caractérisé par le fait que l'organe actif ressort/amortisseur (6) est un organe hydraulique.

6. Système de suspension selon la revendication 1, caractérisé par le fait que l'organe actif ressort/amortisseur (6') est divisé en un amortisseur passif (6a) à amortissement relatif faible et un organe actif ressort/amortisseur (6b) à caractéristique d'amortissement progressive qui n'agit pour l'essentiel qu'à partir de la variation critique de la distance ($\Delta$X1).

7. Organe de suspension selon l'une des revendications précédentes, caractérisé par le fait que l'organe de suspension est réalisé sous la forme d'une unité autonome.

8. Organe de suspension selon l'une des revendications précédentes, caractérisé par le fait que l'organe de suspension actif (3) est utilisé pour l'inclinaison automatique de la masse suspendue (2) lors du franchissement des courbes.

FIG. 1

FIG. 2

FIG. 3